# EUROPÄISCHE PATENTSCHRIFT

(11) **EP 2 821 028 B1**
(45) Veröffentlichungstag und Bekanntmachung des Hinweises auf die Patenterteilung: **18.04.2018**
(21) Anmeldenummer: 14172262.9
(22) Anmeldetag: 13.06.2014
(51) Int. Cl.: A61C 13/08, A61C 5/70, A61C 13/01

(54) **Verfahren zur Herstellung eines Gebisses**
Method for producing a denture
Procédé de fabrication d'un dentier

(30) Priorität: 14.06.2013 DE 102013211154
(43) Veröffentlichungstag der Anmeldung: 07.01.2015
(73) Patentinhaber: Kulzer GmbH, 63450 Hanau (DE)
(72) Erfinder: Savic, Novica, 63526 Erlensee (DE); Renz, Karl-Heinz, 63755 Alzenau (DE)
(74) Vertreter: Bendele, Tanja

(56) Entgegenhaltungen:
- CH-A- 324 885
- DE-A1- 2 945 489
- DE-A1-102011 102 095
- GB-A- 658 144
- US-A- 1 354 696
- US-A- 1 472 677

## Beschreibung

Die Erfindung betrifft ein Verfahren zur Herstellung eines Gebisses und ein Gebiss.

Gebisse dienen dazu, die Zähne eines zahnlosen Kiefers oder eines teilweise zahnlosen Kiefers zu ersetzen, und soll damit die Kaufunktion des Munds eines Patienten zumindest so gut wie möglich wiederherstellen sowie den ästhetischen Gesamteindruck des Gesichts, insbesondere des Munds verbessern.

In gängiger Praxis werden derzeit Gebisse analog hergestellt. Dabei werden die Zähne manuell und einzeln auf einer Wachsbasis aufgestellt. Diese Wachsprothese wird im nächsten Schritt in einer Küvette mit Gips eingebettet, um dann nach Aushärten des Gipses die Wachsbasis mit heißem Wasser herauszuwaschen und einen Hohlraum für den Prothesenkunststoff zu schaffen.

Die Zähne verbleiben dabei im Gips. Ein entsprechender (PMMA-)Kunststoff wird in den Hohlraum injiziert oder "gestopft" und man erhält nach Aushärtung des Kunststoffs eine fertige Prothesenbasisplatte. Bei der Aufstellung der vorkonfektionierten Zahnprothesen in der Prothesenbasisplatte werden diese der jeweiligen Mundraumsituation des Patienten vom Zahntechniker angepasst und eingeschliffen.

Das wesentliche Problem bei der Herstellung des Gebisses ist die Positionierung der Zahnprothesen in der Prothesenbasisplatte. In der Regel ist dafür eine passgenaue Mulde in der Prothesenbasisplatte vorgesehen oder wird dort erzeugt, um dann die konfektionierten Zähne einzukleben. Das funktioniert jedoch nur, wenn ausreichend Platz vorhanden ist und die Zahnprothesen nicht von unten (basal) angeschliffen beziehungsweise abgeschliffen werden müssen. Das ist jedoch eher die Ausnahme, da in den meisten Fällen die Zahnprothesen aus Platzgründen geschliffen werden müssen. Die axiale Länge der Zahnprothesen muss nämlich meist zur Herstellung einer optimalen Okklusionsebene (das ist die Ebene in der der die Zähne beziehungsweise Zahnprothesen des Oberkiefers und des Unterkiefers bei geschlossenem Mund aneinander anliegen sollen) angepasst werden. In solchen Fällen passen die Zahnprothesen aber meist nicht mehr in die vorproduzierten Mulden in der Prothesenbasisplatte.
Seit neuestem ist es bekannt, Gebisse als Teilprothesen oder Totalprothesen digital aufzustellen und mit Hilfe von CAD-Verfahren ("Computer Aided Design"-Verfahren) zu produzieren. Aus der WO 2012/152735 A1 ist ein Verfahren bekannt, bei dem künstliche Zähne hergestellt werden, indem mit Hilfe eines eingelesenen Oberflächenscans ein Datensatz für ein dreidimensionales CAD-Modell erzeugt wird und der künstliche Zahn mit einem CAM-Verfahren ("Computer Aided Manufacturing"-Verfahren) auf Basis des CAD-Modells erzeugt wird.
Nachteilig ist hieran, dass bei einer Zahnprothese, die mit einem CAM-Verfahren hergestellt wurde, der ästhetische Eindruck ohne weitere Nachbearbeitungsschritte wie Polieren und Färben der Zahnprothese nicht optimal ist. Zudem kann die raue Oberfläche der Zahnprothese das Anhaften von Speiseresten begünstigen. Auch entstehen bei CAM-Verfahren durch den meist schichtartigen Aufbau unerwünschte gerichtete physikalische Eigenschaften der Zahnprothese. Schließlich ist man bei der Auswahl von Materialien bei CAM-Verfahren (wie beispielsweise mit 3D-Druckern) eingeschränkt und kann beispielsweise nicht auf besonders harte und leicht transparente Materialien wie Keramiken zurückgreifen, die am ehesten den optischen Eindruck eines echten Zahns erzeugen und der Funktionalität eines echten Zahns entsprechen.

Ein Verfahren zur Herstellung einer Prothese bei welchem Verblendungsschalen auf Zahnstumpfprothesen aufgebracht werden ist aus DE 10 2011 102095 A1 bekannt.

Die Aufgabe der Erfindung besteht also darin, die Nachteile des Stands der Technik zu überwinden. Insbesondere soll ein Verfahren zur Herstellung eines Gebisses und ein Gebiss gefunden werden, bei dem kein basales Abschleifen der Zahnprothesen zum Einpassen der Zahnprothesen in die Prothesenbasisplatte mehr erfolgen muss und bei der aber auch keine Nachbearbeitung des Gebisses zur Herstellung des gewünschten optischen Eindrucks und der Funktionalität des Gebisses erfolgen muss. Zudem sollen möglichst alle gewünschten Materialien verwendbar sein und durch keine unerwünschten gerichteten Eigenschaften die Zahnprothesen geschwächt werden.
Die Aufgaben der Erfindung werden gelöst durch ein Verfahren zur Herstellung eines Gebisses nach Anspruch 1, bei dem eine Prothesenbasisplatte und mehreren Zahnstumpfprothesen durch Anwendung eines CAD-Modells hergestellt werden und vorgefertigte Verblendungsschalen auf den Zahnstumpfprothesen befestigt werden, wobei die Dicken der Verblendungsschalen bei der Erzeugung des CAD-Modells der Zahnstumpfprothesen berücksichtigt werden.

Die Prothesenbasisplatte und die Zahnstumpfprothesen können erfindungsgemäß auch einteilig hergestellt werden. Bevorzugt werden die Zahnstumpfprothesen aber separat zur Prothesenplatte hergestellt und nachträglich in die Prothesenplatte eingefügt, bevorzugt eingeklebt. Dabei können die axialen Längen der Zahnstumpfprothesen durch Kürzen, insbesondere durch Abschleifen oder Abschneiden, vorgefertigter Zahnstumpfprothesen auf der der Prothesenbasisplatte zugewandten Seite oder der gegenüberliegenden koronalen Seite der vorgefertigten Zahnstumpfprothesen eingestellt werden. Für ein CAD-Modell der Zahnstumpfprothesen reicht es dann bereits aus, wenn ausschließlich die axiale Länge der Zahnstumpfprothesen modelliert wird. Es muss erfindungsgemäß aber zumindest die axiale Länge der Zahnstumpfprothesen modelliert werden.

Dazu sollten die äußeren Formen der Zahnstumpfprothesen bekannt und vorgegeben sein und die koronalen Oberflächen der Zahnstumpfprothesen müssen zu den jeweiligen Verblendungsschalen passen. Das CAD-Modell der Zahnstumpfprothese ist dann ein eindimensionales CAD-Modell, da es nur die axiale Länge der Zahnstumpfprothese modelliert. Das Kürzen der vorgefertigten Zahnstumpfprothesen erfolgt dann erfindungsgemäß bevorzugt computergestützt mit einem CAM-Verfahren.

Alternativ können die Zahnstumpfprothesen mit der gewünschten axialen Länge auch vollständig aus einem dreidimensionalen CAD-Modell der Zahnstumpfprothesen mit einem CAM-Verfahren hergestellt werden.

Die aus der Zahnmedizin bekannten Richtungsangaben für Zähne werden vorliegend und im Folgenden auch für die Zahnstumpfprothesen verwendet.

Die Dicke der Verblendungsschalen ist bezogen auf die Materialstärke der Verblendungsschalen zwischen den Okklusionsflächen und den koronalen Auflageflächen der Zahnstumpfprothesen (Verbindungsflächen für die Verbindung der Zahnstumpfprothesen mit den Verblendungsschalen).

Für ein vollständiges Gebiss für den Oberkiefer und den Unterkiefer werden zwei Prothesenbasisplatten mit jeweils mehreren Zahnstumpfprothesen hergestellt.

Bei erfindungsgemäßen Verfahren kann vorgesehen sein, dass die axialen Längen der Zahnstumpfprothesen des CAD-Modells in Abhängigkeit von den Dicken der Verblendungsschalen eingestellt werden, bevorzugt, indem die Zahnstumpfprothesen aus dem CAD-Modell mit den gewünschten axialen Längen hergestellt werden, besonders bevorzugt mit einem CAM-Verfahren.
Dies reicht bereits aus, um die gewünschte Okklusionsebene auch unter Verwendung von vorgefertigten Verblendungsschalen zu realisieren. Das Verfahren ist dann besonders einfach und ohne größeren Rechenaufwand durchzuführen. Erfindungsgemäß wird vorgeschlagen, dass die Form von Verbindungsflächen der Verblendungsschalen bei der Erzeugung des CAD-Modells der Zahnstumpfprothesen berücksichtigt werden, vorzugsweise bei der Erzeugung der virtuellen CAD-Modelle der koronalen Oberflächen der Zahnstumpfprothesen berücksichtigt werden.
Die Verbindungsflächen der Verblendungsschalen sind zur Verbindung der Verblendungsschalen mit den Zahnstumpfprothesen vorgesehen. Die Verbindungsflächen der Verblendungsschalen liegen den Okklusionsflächen der Verblendungsschalen gegenüber.
Alle koronalen Oberflächen der Zahnstumpfprothesen zu den Verblendungsschalen können dabei erfindungsgemäß in den dreidimensionalen CAD-Modellen der Zahnstumpfprothesen als koronale Oberflächen festgelegt sein, da die Verbindungsflächen der vorgefertigten Verblendungsschalen zur Zahnstumpfprothese festgelegt und bekannt ist. Dazu können die Daten der dreidimensionalen Oberflächen der Verbindungsflächen elektronisch gespeichert sein und in die 3D-CAD-Modelle eingerechnet werden. Dabei wiederum kann erfindungsgemäß eine für die Verbindung der Verblendungsschalen zu den Zahnstumpfprothesen notwendige Klebeschichtdicke berücksichtigt werden.
Auch wenn solche Verfahren etwas aufwendiger bezüglich der benötigten Rechenleistung sind, kann mit einem solchen Verfahren weitegehend automatisch ein weitgehend vollständiges und fast fertiges Gebiss einfach ausgedruckt werden, ohne dass es einer Lagerhaltung von vorgefertigten Produkten bedarf.
Mit einer Weiterentwicklung des erfindungsgemäßen Verfahrens wird vorgeschlagen, dass die axialen Längen der erzeugten Zahnstumpfprothesen durch die Dicke der Verblendungsschalen und die gewünschte Lage der Okklusionsebene des Gebisses zur Auflagefläche der Prothesenbasisplatte bestimmt werden.
Durch die Berücksichtigung der gewünschten Lage der Okklusionsebene relativ zu den Kiefersätteln des Oberkiefers und des Unterkiefers kann eine sehr genaue Bestimmung der axialen Längen der Zahnstumpfprothesen bestimmt werden, so dass das erzeugte Gebiss sehr genau herstellbar ist.
Eine besonders bevorzugte Ausführungsform eines erfindungsgemäßen Verfahrens weist die folgenden chronologisch geordneten Schritte auf:
A Aufnehmen der Mundraumsituation und Bestimmen der Lage der gewünschten Okklusionsebene im Mundraum eines Patienten;
B Digitalisieren der aufgenommenen Mundraumsituation und der Lage der gewünschten Okklusionsebene;
C Erzeugen eines virtuellen CAD-Modells der Prothesenbasisplatte und der Mehrzahl der Zahnstumpfprothesen, wobei die Auflagefläche des virtuellen CAD-Modells der Prothesenbasisplatte auf der Basis der Mundraumsituation bestimmt wird;
D Herstellen einer Prothesenbasisplatte und einer Mehrzahl von Zahnstumpfprothesen auf Basis des CAD-Modells; und
E Befestigen der Verblendungsschalen auf den Zahnstumpfprothesen.
Hiermit wird ein vollständiges Verfahren zur Herstellung eines Gebisses angegeben. Dabei kann vorgesehen sein, dass als Mundraumsituation zumindest die Form der Kieferkammoberfläche des Oberkiefers und/oder des Unterkiefers sowie deren Lage(n) zur Okklusionsebene aufgenommen und digitalisiert wird und die Auflagefläche des virtuellen CAD-Modells der Prothesenbasisplatte aus der digitalisierten Kieferkammoberfläche berechnet wird. Erfindungsgemäß ist vorgesehen, dass die Zahnstumpfprothesen auf Basis des CAD-Modells erzeugt werden, bevorzugt mit einem CAM-Verfahren erzeugt werden, und die Verblendungsschalen an den dafür vorgesehenen Zahnstumpfprothesen befestigt werden, bevorzugt auf die dafür vorgesehenen Zahnstumpfprothesen geklebt werden.
Hierdurch ergibt sich eine Vereinfachung der Herstellung der erfindungsgemäßen Gebisse. Es kann vorgesehen sein, dass die Prothesenbasisplatte und die Zahnstumpfprothesen als separate Teile mit separaten CAD-Modellen gefertigt werden und die hergestellten Zahnstumpfprothesen in der hergestellten Prothesenbasisplatte befestigt werden, bevorzugt eingeklebt werden.
Bei dieser Ausführung ist eine nachträgliche Bearbeitung der Zahnstumpfprothesen aber auch der Prothesenbasisplatten möglich. Zudem können diese dann aus unterschiedlichen passenden Materialien gefertigt werden.
Mit einer Weiterentwicklung des erfindungsgemäßen Verfahrens wird vorgeschlagen, dass jeweils eine Prothesenbasisplatte für den Oberkiefer und eine Prothesenbasisplatte für den Unterkiefer auf Basis der gleichen Okklusionsebene erzeugt werden und das Gebiss mit einem Gebissteil für den Oberkiefer und einem Gebissteil für den Unterkiefer gefertigt wird.
Das Verfahren ist dadurch einfach realisierbar und vermeidet unnötige Schritte. Erfindungsgemäß ist vorgesehen, dass die Verblendungsschalen die Zahnstumpfprothesen okklusal vollständig bedecken, bevorzugt okklusal und bukkal vollständig bedecken, besonders bevorzugt approximal zumindest bereichsweise bedecken.
Die Verblendungsschalen schützen so die Zahnstumpfprothese und sorgen für einen guten ästhetischen Gesamteindruck.
Auch kann vorgesehen sein, dass die Prothesenbasisplatte und/oder die Zahnstumpfprothesen aus einem Kunststoff, bevorzugt aus PMMA gefertigt werden. Kunststoffe lassen sich gut bearbeiten und sind mit modernen CAM-Verfahren gut umsetzbar. Erfindungsgemäß ist vorgesehen, dass die Verbindungsflächen der Verblendungsschalen eine indexierte Strukturierung aufweisen und die zu den Verbindungsflächen der Verblendungsschalen vorgesehenen Oberflächen der Zahnstumpfprothesen eine dazu passende indexierte Strukturierung aufweisen, und die Zahnstumpfprothesen mit solchen passenden indexierten Strukturierungen erzeugt werden, und die Verblendungsschalen mit den Zahnstumpfprothesen über die indexiert strukturierten Oberflächen aneinander gefügt werden und dabei die Verblendungsschalen auf den Zahnstumpfprothesen orientiert werden.
Hierdurch kann vermieden werden, dass die Verblendungsschalen auf falsche Zahnstumpfprothesen aufgesetzt werden und dass die Verblendungsschalen mit der falschen Orientierung auf den Zahnstumpfprothesen befestigt werden.

Die der vorliegenden Erfindung zugrunde liegenden Aufgaben werden auch gelöst durch ein Gebiss nach Anspruch 9, bei dem mehrere Zahnstumpfprothesen in einer Prothesenbasisplatte befestigt sind oder einteilig mit der Prothesenbasisplatte aufgebaut sind und auf den Zahnstumpfprothesen koronal Verblendungsschalen befestigt sind, bevorzugt auf jeder Zahnstumpfprothese koronal eine Verblendungsschale befestigt ist. Erfindungsgemäß wird das Gebiss mit einem erfindungsgemäßen Verfahren gefertigt. Es kann auch vorgesehen sein, dass die Verblendungsschalen aus einer Keramik oder aus einem Kunststoff bestehen, bevorzugt aus PMMA bestehen.
Bevorzugt ist die Verblendungsschale auf der Zahnstumpfprothese aufgeklebt beziehungsweise sind die Verblendungsschalen auf den Zahnstumpfprothesen aufgeklebt.
Für alle erfindungsgemäßen Gebisse gilt, dass diese auch die gegenständlichen Vorrichtungsmerkmale erfindungsgemäßer Verfahren und sich aus den Verfahrensschritten ergebende Vorrichtungsmerkmale aufweisen können.
Der Erfindung liegt die überraschende Erkenntnis zugrunde, dass es durch die Verwendung von Verblendungsschalen und durch die Berücksichtigung von deren Abmessungen und bevorzugt auch deren Form gelingt, die Prothesenbasisplatte nur mit Zahnstumpfprothesen bestücken zu müssen, die dann anschließend mit den Verblendungsschalen bestückt werden können. Durch die Verwendung der Verblendungsschalen kann der ästhetische Eindruck des Gebisses verbessert werden und es besteht ganz allgemein eine größere Freiheit bei der Auswahl des Materials im Vergleich zu einer vollständig mit einem CAM-Verfahren gefertigten Prothese. Gleichzeitig können mit dem erfindungsgemäßen Verfahren aber auch die Vorteile der Herstellung eines Gebisses mit einem CAD-/CAM-Verfahren genutzt werden. Hierdurch ist es möglich, ein exaktes, schnell bereitstehendes Gebiss kostengünstig zu fertigen, aber gleichzeitig auch hohe Anforderungen hinsichtlich der Ästhetik und an die physikalischen Eigenschaften des Materials (wie große Härte und geringe Oberflächenrauhigkeit beziehungsweise eine glatte Oberfläche) erfüllen zu können. Das Prinzip bietet maximale Flexibilität bei der digitalen Herstellung von Teil- und Totalprothesen hinsichtlich Zahnaufstellung. Es werden keine klassischen Konfektionszähne verwendet, die basal angeschliffen werden müssen. Die Ästhetik und Kaufunktion wird über dünne, konfektionierte Verblendungsschalen erzielt.
Eine grobe Zahnstumpfprothese in Zahnfarbe (ein- oder mehrfarbig) wird über ein CAD-Verfahren designt und per CAM (gefräst oder gedruckt) produziert. Dabei können die Platzverhältnisse individuell berücksichtigt werden. In einem zweiten Schritt werden vorkonfektionierte, dünne Verblendungsschalen auf die vorgefertigten Zahnstumpfprothesen aufgesteckt und mit diesen verklebt. Die Verbindung zwischen beiden Elementen erfolgt beispielsweise über genau definierte kleine Mulden in den Zahnstumpfprothesen beziehungsweise über deren Gegenstücke in den Verblendungsschalen, ähnlich dem LEGO-Prinzip.

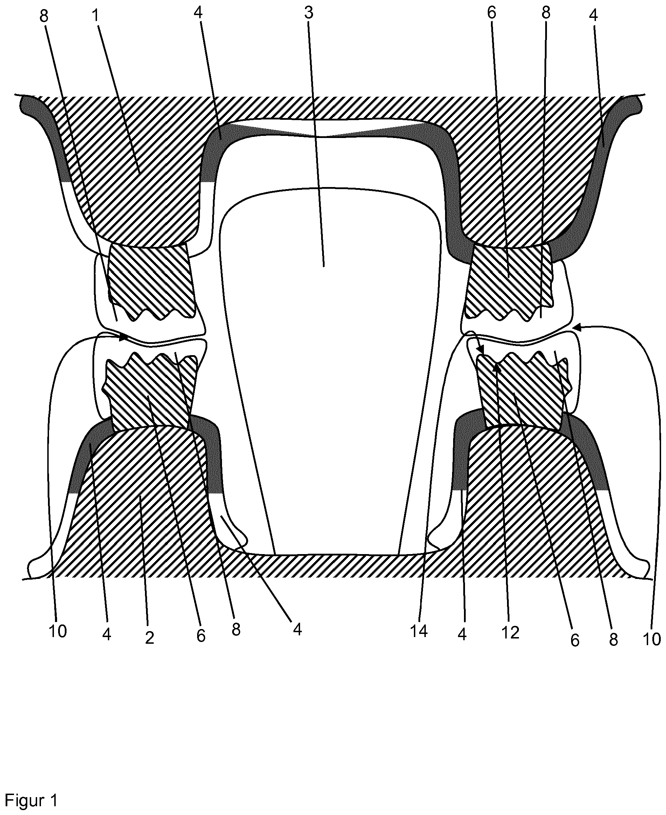

Im Folgenden werden Ausführungsbeispiele der Erfindung anhand einer schematisch dargestellten Figur erläutert, ohne jedoch dabei die Erfindung zu beschränken. Dabei zeigt Figur 1 eine schematische Querschnittansicht durch den Kiefer und Mundraum eines Patienten, in dem ein erfindungsgemäßes Gebiss eingesetzt ist, das mit einem erfindungsgemäßen Verfahren hergestellt wurde.

Vom Patienten sind ein zahnloser Oberkiefer 1 und ein zahnloser Unterkiefer 2 zu erkennen und auch die Zunge 3 des Patienten im Mundraum ist dargestellt. Auf den Zahnbögen sitzt das zweiteilige Gebiss auf. Das Fundament der beiden Gebissteile besteht im Wesentlichen aus je einer Prothesenbasisplatte 4 für den Oberkiefer 1 und den Unterkiefer 2, die auf den zahnlosen Kieferbögen aufliegen. In den Prothesenbasisplatten 4 sind Ausnehmungen für Zahnstumpfprothesen 6 angeordnet, die mit den Zahnstumpfprothesen 6 besetzt sind. Die Zahnstumpfprothesen 6 sind in die Ausnehmungen der Prothesenbasisplatten 4 eingeklebt.

Auf den Zahnstumpfprothesen 6 sind Verblendungsschalen 8 aus einem harten Kunststoff angeordnet, die die Bissfläche der Zahnprothesen des Gebisses bilden. In der Figur 1 sind dabei Zahnprothesen von Backenzähnen dargestellt. Die Verblendungsschalen 8 sind auf der Oberseite durch ihre Okklusionsflächen (bei den Backenzahnprothesen die Kauflächen) begrenzt. Aus der optimalen Lage aller Okklusionsflächen ergibt sich die gewünschte Okklusionsebene 10 der beiden Gebissteile. Die Verblendungsschalen 8 weisen an der, der Okklusionsebene 10 gegenüberliegenden Seite eine Verbindungsfläche 12 auf, mit der die Verblendungsschalen 8 auf der koronalen Seite 14 der Zahnstumpfprothesen 6 durch aufkleben befestigt wird. Die koronale Seite 14 ist strukturiert. Ebenso ist die Verbindungsfläche 12 der Verblendungsschalen 8 strukturiert und bildet ein Negativ der koronalen Oberfläche 14 der Zahnstumpfprothesen 6, so dass die Verblendungsschalen 8 flächenbündig mit den Zahnstumpfprothesen 6 verbunden sind beziehungsweise verbindbar sind.

Durch die Strukturierung der Verbindungsfläche 12 und der koronalen Oberseite 14 kann zum einen eine stabilere Anbindung der Verblendungsschalen 8 an die Zahnstumpfprothesen 6 erreicht werden. Zum anderen bietet eine Strukturierung die Möglichkeit eine Indexierung vorzusehen, die verhindert, dass Verblendungsschalen 8 auf den falschen Zahnstumpfprothesen 6 befestigt werden können und auch, dass die Verblendungsschalen 8 mit einer falschen Orientierung auf den Zahnstumpfprothesen 6 befestigt werden können.

Die gewünschte optimale Okklusionsebene 10 wird vor der Herstellung des Gebisses mit Hilfe bekannter Verfahren ermittelt. Beispielsweise kann der Mundraum selbst oder ein Abdruck davon optisch eingescannt und digitalisiert werden, wobei der gewünschte Abstand zwischen dem Oberkiefer und dem Unterkiefer nach bekannten Gesichtspunkten eingestellt wird. Wenn noch eine Restbezahnung mit natürlichen Zähnen vorhanden ist, können diese zur Bestimmung der gewünschten Okklusionsebene 10 genutzt werden.

Der Mundraumscan beziehungsweise die Daten der dreidimensionalen Oberfläche der Kieferkämme werden zur Bildung zweier CAD-Modelle der Prothesenbasisplatte 4 genutzt. Dabei werden auch schon die Ausnehmungen in den Prothesenbasisplatten 4 für die Zahnstumpfprothesen 6 festgelegt.

Aus einer Vielzahl vorkonfektionierter Verblendungsschalen 8 werden die zum Patienten passenden ausgewählt oder auch hergestellt. Die Verbindungsflächen 12 der Verblendungsschalen 8 sind bekannt und in einem Rechner als dreidimensionale Daten gespeichert. Theoretisch können die Verbindungsflächen 12 der Verblendungsschalen 8 auch als dreidimensionale Oberfläche eingescannt, digitalisiert und zur Berechnung der koronalen Oberfläche der Zahnstumpfprothesen 6 verwendet werden. Ebenso sind die Dicken der Verblendungsschalen 8 bekannt oder werden ermittelt und als Datensätze gespeichert. Aus den Positionen der Zahnstumpfprothesen 6, der Form der Verbindungsflächen 12 der Verblendungsschalen 8 und der gewünschten Lage der Okklusionsebene 10 relativ zu den Kieferkämmen des Oberkiefers 1 und des Unterkiefers 2 wird mit einem CAD-Verfahren die äußere Form der Zahnstumpfprothesen 6 berechnet. So erhält man neben den CAD-Modellen für die Prothesenbasisplatten 4 auch CAD-Modelle für die Zahnstumpfprothesen 6.

Mit den CAD-Modellen werden die Prothesenbasisplatten 4 und die Zahnstumpfprothesen 6 mit einem CAM-Verfahren hergestellt. Die Prothesenbasisplatten 4 und die Zahnstumpfprothesen 6 können beispielsweise mit einer computergesteuerten Mehrachsfräse aus massiven Körpern ausgefräst werden. Bevorzugt werden die Prothesenbasisplatten 4 und die Zahnstumpfprothesen 6 jedoch mit einem 3D-Drucker ausgedruckt und dabei direkt aus PMMA (Polymethylmethacrylat) hergestellt. Die Prothesenbasisplatten 4 werden dabei in der Farbe des Zahnfleischs gefertigt, während die Zahnstumpfprothesen 6 einen weißen oder weißlichen Farbton erhalten.
Nachdem anschließend die Zahnstumpfprothesen 6 in die Prothesenbasisplatten 4 eingeklebt wurden, werden die Verblendungsschalen 8 auf die dafür vorgesehenen Zahnstumpfprothesen 6 geklebt. Alternativ können die Zahnstumpfprothesen 6 auch direkt in einem mit den Prothesenplatten 4 hergestellt beziehungsweise ausgedruckt werden, um Fehler bei der Verbindung der Teile zu vermeiden, beziehungsweise um Arbeitsschritte einzusparen.
Die Verblendungsschalen 8 haben die gewünschten Materialeigenschaften und die gewünschte Färbung sowie geeignete optischen Eigenschaften (beispielsweise eine leichte Transparenz zum Erzeugen eines möglichst echten Aussehens).
Nach dem Austrocknen der Klebstoffe ist das Gebiss fertig und kann verwendet werden. Kleinere Fehlstellungen der Prothesenzähne bezüglich der Okklusionsfläche können durch Abschleifen geringer Mengen der Verblendungsschalen 8 an den Okklusionsflächen noch nachkorrigiert werden. Da das CAD-CAM-Verfahren zur Herstellung der Prothesenbasisplatten 4 und Zahnstumpfprothesen 6 jedoch sehr exakt ist, müssen höchstens nur geringe Mengen angeschliffen werden.

### Bezugszeichenliste

- 1: Oberkiefer
- 2: Unterkiefer
- 3: Zunge
- 4: Prothesenbasisplatte
- 6: Zahnstumpfprothese
- 8: Verblendungsschale
- 10: Okklusionsebene
- 12: Koronale Oberfläche der Zahnstumpfprothese mit Strukturierung
- 14: Verbindungsfläche der Zahnstumpfprothese mit Strukturierung

## Patentansprüche

1. Verfahren zur Herstellung eines Gebisses bei dem eine Prothesenbasisplatte (4) und mehreren Zahnstumpfprothesen (6) durch Anwendung eines CAD-Modells hergestellt werden und vorgefertigte Verblendungsschalen (8) auf den Zahnstumpfprothesen (6) befestigt werden,
- wobei die Dicken der Verblendungsschalen (8) bei der Erzeugung des CAD-Modells der Zahnstumpfprothesen (6) berücksichtigt werden, indem die axialen Längen der Zahnstumpfprothesen (6) des CAD-Modells in Abhängigkeit von den Dicken der Verblendungsschalen (8) eingestellt werden,
- wobei die Form von Verbindungsflächen (12) der Verblendungsschalen (8) bei der Erzeugung des CAD-Modells der Zahnstumpfprothesen (6) berücksichtigt werden, und wobei die Zahnstumpfprothesen (6) auf Basis des CAD-Modells mit einem CAM-Verfahren mit den gewünschten axialen Längen hergestellt werden, und
die axialen Längen der erzeugten Zahnstumpfprothesen (6) durch die Dicke der Verblendungsschalen (8) und die gewünschte Lage der Okklusionsebene (10) des Gebisses zur Auflagefläche der Prothesenbasisplatte (4) bestimmt werden, und
- wobei die Verblendungsschalen (8) die Zahnstumpfprothesen (6) okklusal vollständig bedecken, und die Verbindungsflächen der Verblendungsschalen eine indexierte Strukturierung aufweisen und
- wobei die Zahnstumpfprothesen (6) mit dazu passenden indexierten Strukturierungen erzeugt werden und die Verblendungsschalen (8) mit den Zahnstumpfprothesen (6) über die indexiert strukturierten Oberflächen aneinander gefügt werden und dabei die Verblendungsschalen (8) auf den Zahnstumpfprothesen (6) orientiert werden, und die Verblendungsschalen an den dafür vorgesehenen Zahnstumpfprothesen befestigt werden und die Indexierung verhindert, dass die Verblendungsschalen auf falsche Zahnstumpfprothesen aufgesetzt und mit der falschen Orientierung auf den Zahnstumpfprothesen befestigt werden.

2. Verfahren nach einem der vorangehenden Ansprüche, mit den folgenden chronologisch geordneten Schritten:
A Aufnehmen der Mundraumsituation und Bestimmen der Lage der gewünschten Okklusionsebene (10) im Mundraum eines Patienten;
B Digitalisieren der aufgenommenen Mundraumsituation und der Lage der gewünschten Okklusionsebene (10);
C Erzeugen eines virtuellen CAD-Modells der Prothesenbasisplatte (4) und der Mehrzahl der Zahnstumpfprothesen (6), wobei die Auflagefläche des virtuellen CAD-Modells der Prothesenbasisplatte (4) auf der Basis der Mundraumsituation bestimmt wird;
D Herstellen einer Prothesenbasisplatte (4) und einer Mehrzahl von Zahnstumpfprothesen (6) auf Basis des CAD-Modells; und
E Befestigen der Verblendungsschalen (8) auf den Zahnstumpfprothesen (6).

3. Verfahren nach Anspruch 2, **dadurch gekennzeichnet, dass** als Mundraumsituation zumindest die Form der Kieferkammoberfläche des Oberkiefers (1) und/oder des Unterkiefers (2) sowie deren Lage(n) zur Okklusionsebene (10) aufgenommen und digitalisiert wird und die Auflagefläche des virtuellen CAD-Modells der Prothesenbasisplatte (4) aus der digitalisierten Kieferkammoberfläche berechnet wird.

4. Verfahren nach einem der vorangehenden Ansprüche, **dadurch gekennzeichnet, dass** die Zahnstumpfprothesen (6) auf Basis des CAD-Modells mit einem CAM-Verfahren erzeugt werden und die Verblendungsschalen (8) auf die dafür vorgesehenen Zahnstumpfprothesen (6) geklebt werden.

5. Verfahren nach einem der vorangehenden Ansprüche, **dadurch gekennzeichnet, dass** die Prothesenbasisplatte (4) und die Zahnstumpfprothesen (6) als separate Teile mit separaten CAD-Modellen gefertigt werden und die hergestellten Zahnstumpfprothesen (6) in der hergestellten Prothesenbasisplatte (4) befestigt werden, bevorzugt eingeklebt werden.

6. Verfahren nach einem der vorangehenden Ansprüche, **dadurch gekennzeichnet, dass** jeweils eine Prothesenbasisplatte (4) für den Oberkiefer (1) und eine Prothesenbasisplatte (4) für den Unterkiefer (2) auf Basis der gleichen Okklusionsebene (10) erzeugt werden und das Gebiss mit einem Gebissteil für den Oberkiefer (1) und einem Gebissteil für den Unterkiefer (2) gefertigt wird.

7. Verfahren nach einem der vorangehenden Ansprüche, **dadurch gekennzeichnet, dass** die Verblendungsschalen (8) die Zahnstumpfprothesen (6) okklusal und bukkal vollständig bedecken, besonders bevorzugt approximal zumindest bereichsweise bedecken.

8. Verfahren nach einem der vorangehenden Ansprüche, **dadurch gekennzeichnet, dass** die Prothesenbasisplatte (4) und/oder die Zahnstumpfprothesen (6) aus einem Kunststoff, bevorzugt aus PMMA gefertigt werden.

9. Gebiss, gefertigt mit einem Verfahren nach einem der vorangehenden Ansprüche, bei dem mehrere Zahnstumpfprothesen (6) in einer Prothesenbasisplatte (4) befestigt sind oder einteilig mit der Prothesenbasisplatte (4) aufgebaut sind und auf den Zahnstumpfprothesen (6) koronal Verblendungsschalen (8) befestigt sind, bevorzugt auf jeder Zahnstumpfprothese (6) koronal eine Verblendungsschale (8) befestigt ist, wobei die Verblendungsschalen (8) eine Verbindungsfläche (12) mit einer indexierten Strukturierung aufweisen und die zu den Verbindungsflächen (12) der Verblendungsschalen (8) vorgesehenen Oberflächen (14) der Zahnstumpfprothesen (6) eine dazu passende indexierte Strukturlerung aufweisen.

10. Gebiss nach Anspruch 9, **dadurch gekennzeichnet, dass** die Verblendungsschalen (8) aus einer Keramik oder aus einem Kunststoff bestehen, bevorzugt aus PMMA bestehen.

## Claims

1. Method for the production of a denture, in which a prosthetic baseplate (4) and multiple tooth stump prostheses (6) are produced by applying a CAD model and pre-fabricated veneers (8) are affixed on the tooth stump prostheses (6),
- whereby the thicknesses of the veneers (8) are taken into consideration during the generation of the CAD model of the tooth stump prostheses (6) by adjusting the axial lengths of the tooth stump prostheses (6) of the CAD model as a function of the thicknesses of the veneers (8),
- whereby the shape of connecting surfaces (12) of the veneers (8) are taken into consideration in the generation of the CAD model of the tooth stump prostheses (6), and whereby the tooth stump prostheses (6) are produced based on the CAD model through the use of a CAM method to have the desired axial lengths, and the axial lengths of the tooth stump prostheses (6) thus generated are determined by the thickness of the veneers (8) and the desired position of the occlusal plane (10) of the denture with respect to the contact surface of the prosthetic baseplate (4), and
- whereby the veneers (8) cover the tooth stump prostheses (6) completely in occlusal direction, and the connecting surfaces of the veneers have an indexed structuring, and
- whereby the tooth stump prostheses (6) are generated to have matching indexed structurings, and the veneers (8) are joined to the tooth stump prostheses (6) via the indexed structured surfaces and the veneers (8) are thus being oriented on the tooth stump prostheses (6), and the veneers are affixed to the designated tooth stump prostheses, and the indexing prevents the veneers from being placed on wrong tooth stump prostheses and being affixed on the tooth stump prostheses at the wrong orientation.

2. Method according to any one of the preceding claims, comprising, in chronological order, the following steps of:
A Recording the situation in the oral cavity and determining the position of the desired occlusal plane (10) inside the oral cavity of a patient;
B Digitising the recorded situation in the oral cavity and the position of the desired occlusal plane (10);
C Generating a virtual CAD model of the prosthetic baseplate (4) and the plurality of the tooth stump prostheses (6), whereby the contact surface of the virtual CAD model of the prosthetic baseplate (4) is determined based on the situation in the oral cavity;
D Producing a prosthetic baseplate (4) and a plurality of tooth stump prostheses (6) based on the CAD model; and
E Affixing the veneers (8) on the tooth stump prostheses (6).

3. Method according to claim 2, **characterised in that**
at least the shape of the alveolar ridge surface of the upper jaw (1) and/or of the lower jaw (2) as well as its/their position(s) with respect to the occlusal plane (10) is recorded and digitised as situation in the oral cavity, and the contact surface of the virtual CAD model of the prosthetic baseplate (4) is computed from the digitised alveolar ridge surface.

4. Method according to any one of the preceding claims, **characterised in that**
the tooth stump prostheses (6) are generated based on the CAD model through the use of a CAM method and the veneers (8) are glued onto the designated tooth stump prostheses (6).

5. Method according to any one of the preceding claims, **characterised in that**
the prosthetic baseplate (4) and the tooth stump prostheses (6) are fabricated as separate parts with separate CAD models, and the tooth stump prostheses (6) thus produced are affixed, preferably are glued, into the prosthetic baseplate (4) thus produced.

6. Method according to any one of the preceding claims, **characterised in that**
one prosthetic baseplate (4) for the upper jaw (1) and one prosthetic baseplate (4) for the lower jaw (2), respectively, are generated based on the same occlusal plane (10), and the denture is fabricated to have a denture component for the upper jaw (1) and a denture component for the lower jaw (2).

7. Method according to any one of the preceding claims, **characterised in that**
the veneers (8) cover the tooth stump prostheses (6) completely in occlusal and buccal directions, particularly preferably cover them at least partly in approximal direction.

8. Method according to any one of the preceding claims, **characterised in that**
the prosthetic baseplate (4) and/or the tooth stump prostheses (6) are fabricated from a plastic material, preferably from PMMA.

9. Denture, fabricated through a method according to any one of the preceding claims, in which multiple tooth stump prostheses (6) are affixed in a prosthetic baseplate (4) or are structured to be the same part as the prosthetic baseplate (4), and veneers (8) are affixed in coronal direction on the tooth stump prostheses (6), preferably a veneer (8) is affixed in coronal direction on each tooth stump prosthesis (8), whereby the veneers (8) have a connecting surface (12) having an indexed structuring, and the surfaces (14) of the tooth stump prostheses (6) designated for the connecting surfaces (12) of the veneers (8) have a matching indexed structuring.

10. Denture according to claim 9, **characterised in that**
the veneers (8) consist of a ceramic or a plastic material, preferably consist of PMMA.

## Revendications

1. Procédé pour la production d'un dentier, selon lequel une plaque de base de prothèse (4) et des multiples prothèses de moignon de dent (6) sont produites en appliquant un modèle CAO et des facettes préfabriquées (8) sont fixées sur les prothèses de moignon de dent (6),
- selon lequel les épaisseurs des facettes (8) sont prises en considération lors de la génération du modèle CAO des prothèses de moignon de dent (6) en ajustant les longueurs axiales des prothèses de moignon de dent (6) du modèle CAO en fonction des épaisseurs des facettes (8),
- selon lequel la forme de surfaces de connexion (12) des facettes (8) sont prises en considération lors de la génération du modèle CAO des prothèses de moignon de dent (6), et selon lequel les prothèses de moignon de dent (6) sont produites sur la base du modèle CAO par l'utilisation d'un procédé FAO d'avoir les longueurs axiales désirées, et les longueurs axiales des prothèses de moignon de dent (6) donc générées sont déterminées par l'épaisseur des facettes (8) et la position désirée du plan occlusal (10) du dentier par rapport à la surface de contact de la plaque de base de prothèse (4), et
- selon lequel les facettes (8) couvrent les prothèses de moignon de dent (6) complètement dans la direction occlusale, et les surfaces de connexion des facettes ont une structuration indexée, et
- selon lequel les prothèses de moignon de dent (6) sont générées d'avoir des structurations indexées correspondantes, et les facettes (8) sont jointes aux prothèses de moignon de dent (6) via les surfaces indexées structurées et les facettes (8) sont donc orientées sur les prothèses de moignon de dent (6), et les facettes sont fixée aux prothèses de moignon de dent désignées, et l'indexation empêche les facettes d'étant mises sur des mauvaises prothèses de moignon de dent et d'étant fixées sur les prothèses de moignon de dent à la mauvaise orientation.

2. Procédé selon l'une des revendications précédentes, comprenant, dans l'ordre chronologique, les étapes suivantes de:
A Enregistrant la situation dans la cavité buccale et déterminant la position du plan occlusal désiré (10) à l'intérieur de la cavité buccale d'un patient;
B Numérisant la situation dans la cavité buccale enregistrée et la position du plan occlusal désiré (10);
C Générant un modèle CAO virtuel de la plaque de base de prothèse (4) et la pluralité des prothèses de moignon de dent (6), selon lequel la surface de contact du modèle CAO virtuel de la plaque de base de prothèse (4) est déterminée sur la base de la situation dans la cavité buccale;
D Produisant une plaque de base de prothèse (4) et une pluralité des prothèses de moignon de dent (6) sur la base du modèle CAO; et
E Fixant les facettes (8) sur les prothèses de moignon de dent (6).

3. Procédé selon la revendication 2, **caractérisé en ce que**
au moins la forme de la surface de crête alvéolaire de la mâchoire supérieure (1) et/ou de la mâchoire inférieure (2) aussi bin que sa/leurs position(s) par rapport au plan occlusal (10) est enregistrée et numérisée à titre de la situation dans la cavité buccale, et la surface de contact du modèle CAO virtuel de la plaque de base de prothèse (4) est calculée de la surface de crête alvéolaire numérisée.

4. Procédé selon l'une des revendications précédentes, **caractérisé en ce que**
les prothèses de moignon de dent (6) sont générée sur la base du modèle CAO par l'utilisation d'un procédé FAO et les facettes (8) sont collée sur les prothèses de moignon de dent désignées (6).

5. Procédé selon l'une des revendications précédentes, **caractérisé en ce que**
la plaque de base de prothèse (4) et les prothèses de moignon de dent (6) sont fabriquées sous forme de pièces séparées avec des modèles CAO séparés, et les prothèses de moignon de dent (6) donc produites sont fixées, de préférence sont collées, dans la plaque de base de prothèse (4) donc produite.

6. Procédé selon l'une des revendications précédentes, **caractérisé en ce que**
une plaque de base de prothèse (4) pour la mâchoire supérieure (1) et une plaque de base de prothèse (4) pour la mâchoire inférieure (2), respectivement, sont générées sur la base du même plan occlusal (10), et le dentier est fabriqué d'avoir un composant de dentier pour la mâchoire supérieure (1) et un composant de dentier pour la mâchoire inférieure (2).

7. Procédé selon l'une des revendications précédentes, **caractérisé en ce que**
les facettes (8) couvrent les prothèses de moignon de dent (6) complètement dans les directions occlusale et buccale, de préférence plus particulière couvrent eux au moins partiellement dans la direction approximale.

8. Procédé selon l'une des revendications précédentes, **caractérisé en ce que** la plaque de base de prothèse (4) et/ou les prothèses de moignon de dent (6) sont fabriquées en une matière plastique, de préférence en PMMA.

9. Dentier, fabriqué par l'utilisation d'un procédé selon l'une des revendications précédentes, selon lequel des multiples prothèses de moignon de dent (6) sont fixées dans une plaque de base de prothèse (4) ou sont structurée pour être la même partie que la plaque de base de prothèse (4), et des facettes (8) sont fixées dans la direction coronale sur les prothèses de moignon de dent (6), de préférence une facette (8) est fixée dans la direction coronal sur chacune plaque de base de prothèse (6), selon lequel les facettes (8) ont une surface de connexion (12) ayant une structuration indexée, et les surfaces (14) des prothèses de moignon de dent (6) désignées pour les surfaces de connexion (12) des facettes (8) ont une structuration indexée correspondante.

10. Dentier selon la revendication 9, **caractérisé en ce que**
les facettes (8) consistent d'un matière céramique ou plastique, de préférence consistent de PMMA.
